# EUROPÄISCHE PATENTANMELDUNG

(11) **EP 4 632 233 A1**
(43) Veröffentlichungstag der Anmeldung: **15.10.2025**
(21) Anmeldenummer: 24169682.2
(22) Anmeldetag: 11.04.2024
(51) Int. Cl.: F15B 1/02, B60T 17/00, B62D 5/00, F15B 1/08, F15B 19/00, F15B 20/00, F16H 61/00

(54) **VERFAHREN ZUR ZUSTANDSÜBERPRÜFUNG EINES HYDROSPEICHERS**

(71) Anmelder: Deere & Company, Moline, IL 61265 (US)
(72) Erfinder: Meid, Michael, Mannheim (DE); Busold, Thomas, Mannheim (DE)
(74) Vertreter: Dehnhardt, Florian Christopher

(57) **Zusammenfassung**

Bei einem Verfahren zur Zustandsüberprüfung eines Hydrospeichers (14) weist der Hydrospeicher (14) einen entgegen einer rückstellenden Vorspannkraft eines Kompressionsmittels (18) druckbeaufschlagbaren Flüssigkeitsraum (20) zur reversiblen Speicherung hydraulischer Energie auf, der mit einem Hydrauliksystem (22) kommuniziert, das von einer motorisch angetriebenen Hydraulikpumpe (24) mit Hydraulikflüssigkeit aus einem Hydraulikreservoir (26) gespeist wird, wobei vorgesehen ist, dass bei Abschalten des motorischen Antriebs (34) der Hydraulikpumpe (24) von einer Kontrolleinrichtung (56) ein im Hydrauliksystem (22) auftretender Druckabbau in Bezug auf einen für das Erreichen eines vollständigen Entspannungszustands des Kompressionsmittels (18) charakteristischen Druckverlaufssprung überwacht sowie ein dem Druckverlaufssprung entsprechender Hydraulikdruck ermittelt wird, wobei ausgehend von dem ermittelten Hydraulikdruck ein von dem Kompressionsmittel (18) ausgeübter Vorspanndruck berechnet wird, um bei Unterschreiten eines vorgegebenen Sollwerts auf eine Fehlfunktion des Hydrospeichers (14) zu schließen.

## Beschreibung

Die Erfindung betrifft ein Verfahren zur Zustandsüberprüfung eines Hydrospeichers, bei dem der Hydrospeicher einen entgegen der rückstellenden Wirkung eines Kompressionsmittels druckvorspannbaren Flüssigkeitsraum zur reversiblen Speicherung hydraulischer Energie aufweist, der mit einem Hydrauliksystem kommuniziert, das von einer motorisch angetriebenen Hydraulikpumpe mit Hydraulikflüssigkeit aus einem Hydraulikreservoir gespeist wird.

Hydrospeicher dienen unter anderem in land- und forstwirtschaftlichen Fahrzeugen der redundanten Absicherung der Hydraulikversorgung hydraulischer Grundfunktionen, insbesondere für den Fall einer Funktionsbeeinträchtigung einer zur Hydraulikversorgung vorgesehenen Hochdruckpumpe. Die hydraulischen Grundfunktionen können neben dem Betrieb einer hydraulischen Bremsanlage oder einer hydrostatischen Fahrzeuglenkung unter anderem auch die hydraulische Steuerung einer Stelleinrichtung zur Betätigung einer Schaltstelle eines von dem land- und forstwirtschaftlichen Fahrzeug umfassten Schaltgetriebes oder dergleichen betreffen.

Hydrospeicher sind in verschiedenen Ausführungen bekannt, grundsätzlich weisen diese jedoch einen entgegen der Wirkung eines Kompressionsmittels druckvorspannbaren Flüssigkeitsraum auf, der der reversiblen Speicherung hydraulischer Energie dient. So kann der Hydrospeicher als Membranspeicher ausgebildet sein, bei dem das Kompressionsmittel durch eine elastische Membran aus Metall oder einem Elastomer gebildet ist, die sich beim Befüllen des Flüssigkeitsraums entgegen der rückstellenden Wirkung eines in einem Gasraum befindlichen kompressiblen Gases, meist Stickstoff, auslenken lässt. Anstelle eines Membranspeichers kann es sich auch um einen Blasenspeicher oder einen Kolbenspeicher handeln.

Wird der Hydrospeicher zur redundanten Absicherung der Hydraulikversorgung hydraulischer Grundfunktionen insbesondere in einem land- und forstwirtschaftlichen Fahrzeug verwendet, so werden an dessen Ausfallsicherheit erhöhte Anforderungen gestellt. Bei einem defektbedingten Funktionsverlust des Kompressionsmittels (in der Regel aufgrund eines leckagebedingten Austritts des kompressiblen Gases) kann diese beeinträchtigt sein.

Es ist daher Aufgabe der vorliegenden Erfindung, ein Verfahren zur Zustandsüberprüfung eines Hydrospeichers anzugeben, mittels dessen eine Degradation der Energiespeicherkapazität des Hydrospeichers frühzeitig und verlässlich erkennbar ist.

Diese Aufgabe wird durch ein Verfahren zur Zustandsüberprüfung eines Hydrospeichers mit den Merkmalen des Patentanspruchs 1 gelöst.

Bei dem erfindungsgemäßen Verfahren zur Zustandsüberprüfung eines Hydrospeichers weist der Hydrospeicher einen entgegen einer rückstellenden Vorspannkraft eines Kompressionsmittels druckbeaufschlagbaren Flüssigkeitsraum zur reversiblen Speicherung hydraulischer Energie auf, der mit einem Hydrauliksystem kommuniziert, das von einer motorisch angetriebenen Hydraulikpumpe mit Hydraulikflüssigkeit aus einem Hydraulikreservoir gespeist wird, wobei vorgesehen ist, dass bei Abschalten des motorischen Antriebs der Hydraulikpumpe von einer Kontrolleinrichtung ein im Hydrauliksystem auftretender Druckabbau in Bezug auf einen für das Erreichen eines vollständigen Entspannungszustands des Kompressionsmittels charakteristischen Druckverlaufssprung überwacht sowie ein dem Druckverlaufssprung entsprechender Hydraulikdruck ermittelt wird, wobei ausgehend von dem ermittelten Hydraulikdruck ein von dem Kompressionsmittel ausgeübter Vorspanndruck berechnet wird, um bei Unterschreiten eines vorgegebenen Sollwerts auf eine Fehlfunktion des Hydrospeichers zu schließen.

Bei der Hydraulikpumpe handelt es sich in der Regel um eine Pumpe mit festem oder verstellbarem Fördervolumen, die Bestandteil eines in einem land- oder forstwirtschaftlichen Fahrzeug angeordneten Hydrauliksystems ist und dort der hydraulischen Speisung eines oder mehrerer hydraulischer Verbraucher dient. Typischerweise wird die Hydraulikpumpe über einen Zahnradantrieb mittels eines von dem Fahrzeug umfassten Verbrennungsmotors in Drehung versetzt. Beim Abstellen des Verbrennungsmotors dreht sich dieser geringfügig bis zum Erreichen seines vollständigen Stillstands weiter. Die Hydraulikpumpe steht dann ebenfalls still, sodass diese nicht länger Hydraulikflüssigkeit in das Hydrauliksystem fördert. Der daraufhin einsetzende Druckabbau stellt die Grundlage für die nachfolgende Beurteilung des Funktionszustands des Hydrospeichers dar. Ist die Funktion des darin enthaltenen Kompressionsmittels aufgrund einer Degradation der Vorspannkraft beeinträchtigt, so äußert sich dies in einem vergleichsweise niedrigen Hydraulikdruck im Druckverlaufssprung. Der insofern für einen funktionstüchtigen Zustand des Kompressionsmittels spezifizierte und dementsprechend vorgegebene Sollwert ergibt sich aus entsprechenden herstellerseitigen Angaben des verwendeten Hydrospeichers und liegt zum Beispiel in der Größenordnung von 12 bar bei in land- oder forstwirtschaftlichen Fahrzeugen für Getriebeschaltzwecke eingesetzten Typen, die der redundanten Absicherung einer hydraulischen Stelleinrichtung zur Betätigung einer Schaltstelle eines Schaltgetriebes oder dergleichen dienen.

Bei dem Hydrospeicher kann es sich um einen Membranspeicher handeln, bei dem das Kompressionsmittel durch eine elastische Membran aus Metall oder einem Elastomer gebildet ist, die sich beim Befüllen des Flüssigkeitsraums entgegen der rückstellenden Wirkung eines in einem Gasraum befindlichen kompressiblen Gases, meist Stickstoff, auslenken lässt. Es sei jedoch angemerkt, dass der Hydrospeicher von beliebiger Bauart sein kann, so kommt ebenso gut auch eine Ausbildung als Blasenspeicher oder Kolbenspeicher in Frage. Eine Degradation der Vorspannkraft tritt dabei in der Regel aufgrund von leckagebedingten Gasverlusten auf.

Auch sei angemerkt, dass der Einsatz des vorgeschlagenen Verfahrens zur Zustandsüberprüfung nicht auf land- oder forstwirtschaftliche Fahrzeuge beschränkt ist, es kann sich ebenso auch um ein Baufahrzeug oder eine stationäre Anwendung handeln.

Vorteilhafte Weiterbildungen des erfindungsgemäßen Verfahrens gehen aus den Unteransprüchen hervor.

Da die seitens des Kompressionsmittels ausgeübte Vorspannkraft und damit die Lage des Druckverlaufssprungs temperaturabhängig ist, ist es von Vorteil, wenn der dem Druckverlaufssprung entsprechende Hydraulikdruck bzw. der sich unmittelbar daraus ergebende Vorspanndruck von der Kontrolleinrichtung in einen temperaturkompensierten Vorspanndruck des Kompressionsmittels umgerechnet und erst danach mit dem vorgegebenen Sollwert zur Beurteilung einer möglichen Fehlfunktion des Hydrospeichers verglichen wird. Die Vorgabe der Bezugstemperatur erfolgt hierbei in Höhe einer standardisierten Raumtemperatur von 20°C.

Abweichend davon ist es auch denkbar, für die Zwecke der Temperaturkompensation den vorgegebenen Sollwert entsprechend anzupassen oder aber den Vergleich mit dem unkompensierten Vorspanndruck ausschließlich bei Vorliegen definierter Temperaturverhältnisse vorzunehmen.

Da die aktuelle Temperatur des kompressiblen Gases im Hydrospeicher in der Regel unbekannt bzw. nur mit erheblichem Zusatzaufwand erfassbar ist, ist es möglich, dass zur Berechnung des temperaturkompensierten Vorspanndrucks von der Kontrolleinrichtung ersatzweise die aktuelle Betriebstemperatur der im Flüssigkeitsraum des Hydrospeichers befindlichen Hydraulikflüssigkeit herangezogen wird. Dies kann auf Grundlage der aktuellen Betriebstemperatur der Hydraulikflüssigkeit im Hydrauliksystem und/oder durch Bewertung der sich aus der aktuellen Außen- bzw. Umgebungstemperatur ergebenden Einflüsse auf die Betriebstemperatur erfolgen. Die Betriebstemperatur der Hydraulikflüssigkeit stellt hierbei letztlich eine Hilfsgröße dar, die zumindest einen indirekten Rückschluss auf die aktuelle Temperatur des kompressiblen Gases im Gasraum des Hydrospeichers zulässt. Im einfachsten Fall wird diese mit der Betriebstemperatur der Hydraulikflüssigkeit gleich gesetzt.

Um insoweit die Genauigkeit der Abschätzung der aktuellen Betriebstemperatur der im Flüssigkeitsraum des Hydrospeichers befindlichen Hydraulikflüssigkeit zu verbessern, ist es denkbar, dass aus einer Vielzahl von zur Ermittlung des Hydraulikdrucks und/oder zur Erfassung der Betriebstemperatur der Hydraulikflüssigkeit im Hydrauliksystem verteilt angeordneten Sensoreinrichtungen von der Kontrolleinrichtung diejenigen ausgewählt bzw. herangezogen werden, die dem Hydrospeicher bzw. dessen Flüssigkeitsraum räumlich am nächsten ist.

Auch besteht die Möglichkeit, dass von der Kontrolleinrichtung durch Ansteuerung einer Bedienerschnittstelle die Ausgabe einer auf eine Fehlfunktion des Hydrospeichers hinweisenden Fahrerinformation und/oder die Erzeugung eines auf eine Fehlfunktion des Hydrospeichers hinweisenden Eintrags in ein Diagnosesystem veranlasst wird. Dies vereinfacht die Beurteilung, ob eine Wartung bzw. ein Austausch des Hydrospeichers erforderlich ist, maßgeblich.

Das erfindungsgemäße Verfahren wird im Folgenden anhand der beigefügten Zeichnungen näher erläutert. Es zeigen:
- Fig. 1: eine schematisch dargestellte Anordnung zur Durchführung des erfindungsgemäßen Verfahrens zur Zustandsüberprüfung eines Hydrospeichers in einem landwirtschaftlichen Traktor,
- Fig. 2: ein als Flussdiagramm veranschaulichtes Ausführungsbeispiel des erfindungsgemäßen Verfahrens zur Zustandsüberprüfung eines Hydrospeichers, und
- Fig. 3: ein Schaubild, in dem das Druckabbauverhalten des Hydrospeichers für zwei verschiedene Funktionszustände repräsentativ wiedergegeben ist.

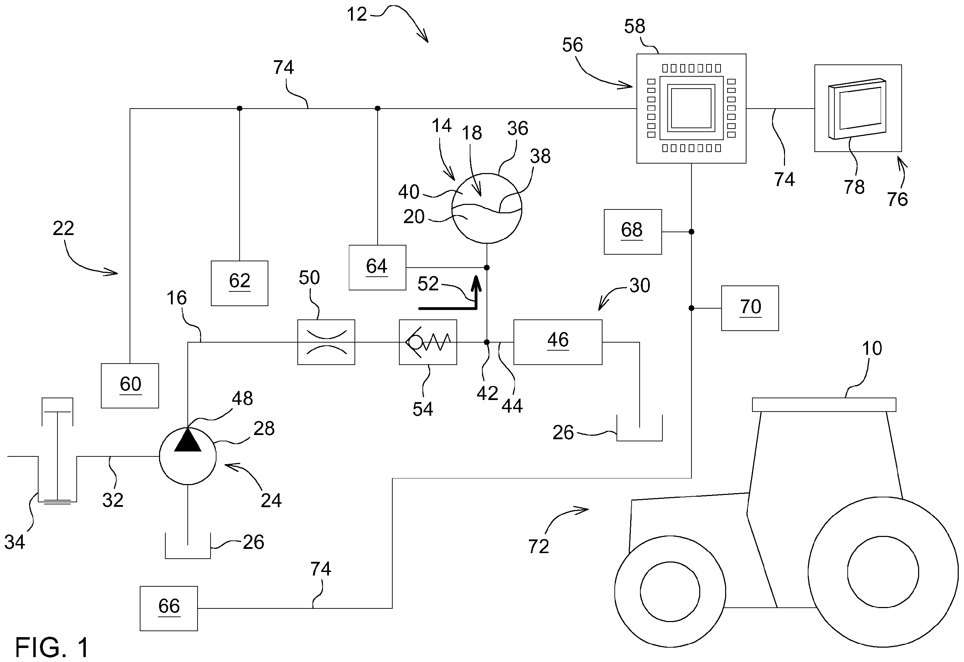

Fig. 1 zeigt eine schematisch dargestellte Anordnung, anhand derer die Funktionsweise des erfindungsgemäßen Verfahrens zur Zustandsüberprüfung eines Hydrospeichers veranschaulicht werden soll.

Die in einem landwirtschaftlichen Traktor 10 befindliche Anordnung 12 umfasst einen Hydrospeicher 14, der über eine Zuleitung 16 mit unter Druck stehender Hydraulikflüssigkeit beaufschlagt werden kann.

Genauer gesagt weist der Hydrospeicher 14 einen entgegen der Wirkung eines Kompressionsmittels 18 druckvorspannbaren Flüssigkeitsraum 20 auf, der der reversiblen Speicherung hydraulischer Energie dient. Hierzu kommuniziert der Flüssigkeitsraum 20 über die Zuleitung 16 mit einem Hydrauliksystem 22 des landwirtschaftlichen Traktors 10, das von einer motorisch angetriebenen Hydraulikpumpe 24 mit Hydraulikflüssigkeit aus einem Hydraulikreservoir 26 gespeist wird. Bei der Hydraulikpumpe 24 handelt es sich vorliegend um eine Pumpe mit festem Fördervolumen bzw. eine Fixpumpe 28, die der Hydraulikversorgung eines hydraulischen Verbrauchers 30 dient. Hierbei wird die Hydraulikpumpe 24 über einen Zahnradantrieb 32 mittels eines von dem landwirtschaftlichen Traktor 10 umfassten Verbrennungsmotors 34 in Drehung versetzt.

Beispielsgemäß ist der Hydrospeicher 14 als Membranspeicher 36 ausgebildet, bei dem das Kompressionsmittel 18 durch eine elastische Membran 38 aus Metall oder einem Elastomer gebildet ist, die sich beim Befüllen des Flüssigkeitsraums 20 entgegen der rückstellenden Wirkung eines in einem Gasraum 40 befindlichen kompressiblen Gases, hier Stickstoff, auslenken lässt. Anstelle eines Membranspeichers 36 kann es sich auch um einen Blasenspeicher oder einen Kolbenspeicher handeln.

Unter Bezugnahme auf die baulich vereinfachte Darstellung der Anordnung 12 in Fig. 1 kommuniziert der Flüssigkeitsraum 20 des Hydrospeichers 14 über eine T-Abzweigung 42 einerseits mit der von der Hydraulikpumpe 24 kommenden Zuleitung 16 und andererseits mit einer Speiseleitung 44 zur Versorgung des hydraulischen Verbrauchers 30, hier einer hydraulischen Stelleinrichtung 46 zur Betätigung einer Schaltstelle eines von dem landwirtschaftlichen Traktor 10 umfassten Schaltgetriebes (nicht gezeigt). Ferner befindet sich in der Zuleitung 16 zwischen einem Förderausgang 48 der Hydraulikpumpe 24 und der T-Abzweigung 42 eine Hydraulikblende 50, gefolgt durch ein in Füllrichtung 52 des Hydrospeichers 14 durchlässiges Rückschlagventil 54.

Eine von der Anordnung 12 umfasste Kontrolleinrichtung 56 weist neben einer elektronischen Steuereinheit (ECU) 58 eine Vielzahl von Sensoreinrichtungen 60, 62, 64, 66, 68 zur Überwachung der im Hydrauliksystem 22 herrschenden Druck- und Temperaturverhältnisse auf, was vorliegend durch Erfassung einer aktuellen Betriebstemperatur der Hydraulikflüssigkeit im Hydrauliksystem 22 bzw. durch Ermittlung eines darin herrschenden Hydraulikdrucks p_sys erfolgt. Eine weitere Sensoreinrichtung 70 dient der Erfassung einer aktuellen Außen- bzw. Umgebungstemperatur, insbesondere innerhalb eines den Hydrospeicher 14 umgebenden Motorraums 72. Die dabei erzeugten Sensordaten werden über einen CAN-Datenbus 74 an die Steuereinheit 58 zur Auswertung weitergegeben. Eine Bedienerschnittstelle 76 erlaubt die Ausgabe von Fahrerinformationen über ein eingebautes Display 78.

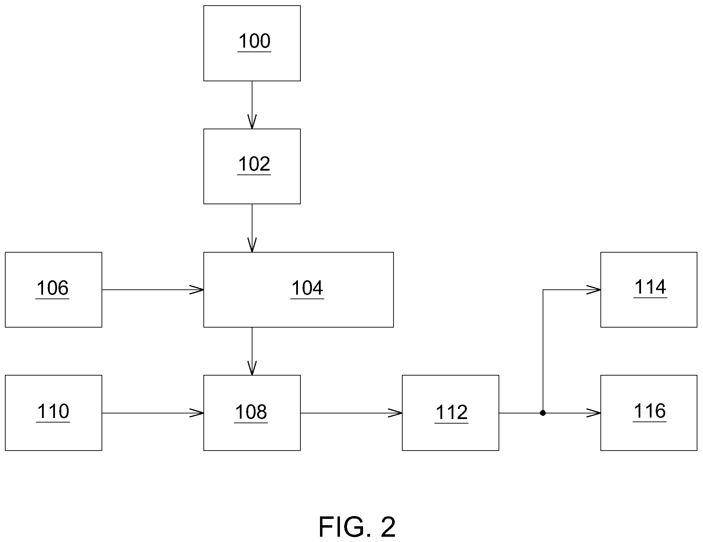

Fig. 2 zeigt den als Flussdiagramm veranschaulichten Ablauf des erfindungsgemäßen Verfahrens.

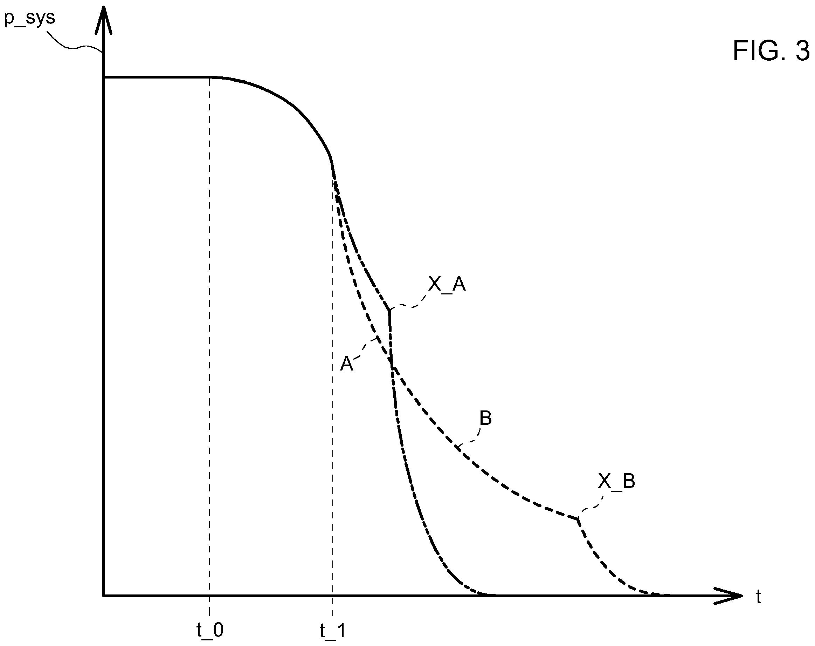

Das in der Steuereinheit 58 als entsprechender Programmcode hinterlegte Verfahren beginnt mit Inbetriebnahme des landwirtschaftlichen Traktors 10 in einem Startschritt 100. Wird der Verbrennungsmotor 34 abgestellt, so wird dies von der Steuereinheit 58 in einem ersten Hauptschritt 102 durch Auswertung zugehöriger Motorbetriebsinformationen, die am CAN-Datenbus 74 anliegen, erkannt. Beim Abstellen des Verbrennungsmotors 34 (Zeitpunkt t = t_0 in Fig. 3) dreht sich dieser geringfügig bis zum Erreichen seines vollständigen Stillstands (Zeitpunkt t = t_1 in Fig. 3) weiter. Die Hydraulikpumpe 24 steht dann ebenfalls still, sodass diese nicht länger Hydraulikflüssigkeit in das Hydrauliksystem 22 fördert. Der daraufhin einsetzende Druckabbau im Hydrauliksystem 22 stellt die Grundlage für eine nachfolgende Beurteilung des Funktionszustands des Hydrospeichers 14 dar.

In diesem Zusammenhang ist zunächst in einem zweiten Hauptschritt 104 vorgesehen, ausgehend von den über den CAN-Datenbus 74 in einem ersten Nebenschritt 106 bereitgestellten Sensordaten den im Hydrauliksystem 22 auftretenden Druckabbau in Bezug auf einen für das Erreichen eines vollständigen Entspannungszustands des Kompressionsmittels 18 charakteristischen Druckverlaufssprung X_A, X_B zu überwachen sowie einen dem Druckverlaufssprung X_A, X_B entsprechenden Hydraulikdruck p_sys zu ermitteln, um ausgehend von dem ermittelten Hydraulikdruck p_sys einen von dem Kompressionsmittel 18 aufgrund der rückstellenden Wirkung des kompressiblen Gases auf die Membran 38 ausgeübten Vorspanndruck p_pre zu berechnen. Hierbei gilt in guter Näherung p_sys≈p_pre.

Das Druckabbauverhalten wie auch die Lage des Druckverlaufssprungs X_A, X_B ist im Schaubild gemäß Fig. 3 für zwei verschiedene Funktionszustände des Hydrospeichers 14 repräsentativ wiedergegeben. Der Druckverlaufssprung X_A, X_B zeichnet sich durch einen charakteristischen und damit leicht zu erfassenden Knick aus. Ist die Funktion des im Hydrospeicher 14 enthaltenen Kompressionsmittels 18 aufgrund einer Degradation der Vorspannkraft beeinträchtigt, so äußert sich dies in einem vergleichsweise niedrigen Hydraulikdruck p_sys im Druckverlaufssprung X_A, X_B. Dieses Verhalten ist in Fig. 3 für einen funktionstüchtigen Zustand des Hydrospeichers 14 (Druckkurve A mit Druckverlaufssprung X_A) und einen funktionsbeeinträchtigten Zustand des Hydrospeichers 14 (Druckkurve B mit Druckverlaufssprung X_B) veranschaulicht.

Da die seitens des Kompressionsmittels 18 ausgeübte Vorspannkraft und damit die Lage des Druckverlaufssprungs X_A, X_B temperaturabhängig ist, wird der dem Druckverlaufssprung X_A, X_B entsprechende Hydraulikdruck p_sys bzw. der sich unmittelbar daraus ergebende Vorspanndruck p_pre in einem dritten Hauptschritt 108 von der Steuereinheit 58 in einen temperaturkompensierten Vorspanndruck p'_pre des Kompressionsmittels 18 umgerechnet. Die Vorgabe der Bezugstemperatur erfolgt hierbei in Höhe einer standardisierten Raumtemperatur von 20°C.

Da die aktuelle Temperatur des kompressiblen Gases im Gasraum 40 des Hydrospeichers 24 in der Regel unbekannt bzw. nur mit erheblichem Zusatzaufwand erfassbar ist, wird zur Berechnung des temperaturkompensierten Vorspanndrucks p'_pre von der Steuereinheit 58 ersatzweise die aktuelle Betriebstemperatur der im Flüssigkeitsraum 20 des Hydrospeichers 14 befindlichen Hydraulikflüssigkeit herangezogen. Dies erfolgt ausgehend von den über den CAN-Datenbus 74 in einem zweiten Nebenschritt 110 bereitgestellten Sensordaten auf Grundlage der aktuellen Betriebstemperatur der Hydraulikflüssigkeit im Hydrauliksystem 22 und/oder durch Bewertung der sich aus der aktuellen Außen- bzw. Umgebungstemperatur ergebenden Einflüsse auf die Betriebstemperatur. Die Betriebstemperatur der Hydraulikflüssigkeit stellt hierbei letztlich eine Hilfsgröße dar, die zumindest einen indirekten Rückschluss auf die aktuelle Temperatur des kompressiblen Gases Gasraum 40 des Hydrospeichers 24 zulässt. Im einfachsten Fall wird diese mit der Betriebstemperatur der Hydraulikflüssigkeit gleich gesetzt.

Hierbei ist vorgesehen, dass von der Steuereinheit 58 aus der Vielzahl der zur Ermittlung des Hydraulikdrucks p_sys und/oder der zur Erfassung der Betriebstemperatur der Hydraulikflüssigkeit im Hydrauliksystem 22 verteilt angeordneten Sensoreinrichtungen 60, 62, 64, 66, 68 diejenigen ausgewählt bzw. herangezogen werden, die dem Hydrospeicher 14 bzw. dessen Flüssigkeitsraum 20 räumlich am nächsten sind.

In einem vierten Hauptschritt 112 vergleicht die Steuereinheit 58 den im dritten Hauptschritt 106 berechneten temperaturkompensierten Vorspanndruck p'_pre mit einem insofern vorgegebenen Sollwert p_pre_soll. Die Vorgabe des Sollwerts p_pre_soll erfolgt entsprechend den Spezifikationen für einen funktionstüchtigen Zustand des Kompressionsmittels 18 und ergibt sich aus entsprechenden herstellerseitigen Angaben des verwendeten Hydrospeichers 14. Beispielsgemäß liegt dieser in der Größenordnung von 12 bar.

Je nach Ergebnis des Vergleichs wird mit einem fünften Hauptschritt 114 oder einem sechsten Hauptschritt 116 fortgefahren:
Ergibt sich im vierten Hauptschritt 112, dass der im dritten Hauptschritt 108 berechnete temperaturkompensierte Vorspanndruck p'_pre den vorgegebenen Sollwert p_pre_soll unterschreitet, so schließt die Steuereinheit 58 auf eine Fehlfunktion des Hydrospeichers 14 und fährt mit dem fünften Hauptschritt 114 fort. In diesem wird von der Steuereinheit 58 durch Ansteuerung der Bedienerschnittstelle 76 bzw. des Displays 78 die Ausgabe einer auf eine Fehlfunktion des Hydrospeichers 14 hinweisenden Fahrerinformation und/oder die Erzeugung eines auf eine Fehlfunktion des Hydrospeichers 14 hinweisenden Eintrags in ein Diagnosesystem (in Fig. 1 nicht abgebildet) veranlasst.

Ist hingegen der vorgegebene Sollwert p_pre_soll nicht unterschritten, so wird davon ausgegangen, dass sich der Hydrospeicher 14 bzw. das Kompressionsmittel 18 in funktionstüchtigem Zustand befindet. Das Verfahren wird in diesem Fall im sechsten Hauptschritt 116 beendet.

Es sei angemerkt, dass der Einsatz des vorgeschlagenen Verfahrens zur Zustandsüberprüfung nicht auf einen landwirtschaftlichen Traktor 10 beschränkt ist, vielmehr kann es sich um land- oder forstwirtschaftliche Fahrzeuge beliebiger Bauart, aber ebenso auch um ein Baufahrzeug oder eine stationäre Anwendung handeln.

## Patentansprüche

1. Verfahren zur Zustandsüberprüfung eines Hydrospeichers (14), bei dem der Hydrospeicher (14) einen entgegen einer rückstellenden Vorspannkraft eines Kompressionsmittels (18) druckbeaufschlagbaren Flüssigkeitsraum (20) zur reversiblen Speicherung hydraulischer Energie aufweist, der mit einem Hydrauliksystem (22) kommuniziert, das von einer motorisch angetriebenen Hydraulikpumpe (24) mit Hydraulikflüssigkeit aus einem Hydraulikreservoir (26) gespeist wird, **dadurch gekennzeichnet, dass** bei Abschalten des motorischen Antriebs (34) der Hydraulikpumpe (24) von einer Kontrolleinrichtung (56) ein im Hydrauliksystem (22) auftretender Druckabbau in Bezug auf einen für das Erreichen eines vollständigen Entspannungszustands des Kompressionsmittels (18) charakteristischen Druckverlaufssprung (X_A, X_B) überwacht sowie ein dem Druckverlaufssprung (X_A, X_B) entsprechender Hydraulikdruck (p_sys) ermittelt wird, wobei ausgehend von dem ermittelten Hydraulikdruck (p_sys) ein von dem Kompressionsmittel (18) ausgeübter Vorspanndruck (p_pre) berechnet wird, um bei Unterschreiten eines vorgegebenen Sollwerts (p_pre_soll) auf eine Fehlfunktion des Hydrospeichers (14) zu schließen.

2. Verfahren nach Anspruch 1, **dadurch gekennzeichnet, dass** der dem Druckverlaufssprung (X_A, X_B) entsprechende Hydraulikdruck (p_sys) bzw. der sich unmittelbar daraus ergebende Vorspanndruck (p_pre) von der Kontrolleinrichtung (56) in einen temperaturkompensierten Vorspanndruck (p'_pre)des Kompressionsmittels (18) umgerechnet und erst danach mit dem vorgegebenen Sollwert (p_pre_soll) zur Beurteilung einer möglichen Fehlfunktion des Hydrospeichers (14) verglichen wird.

3. Verfahren nach Anspruch 2, **dadurch gekennzeichnet, dass** zur Berechnung des temperaturkompensierten Vorspanndrucks (p'_pre) von der Kontrolleinrichtung (56) die aktuelle Betriebstemperatur der im Flüssigkeitsraum (20) des Hydrospeichers (14) befindlichen Hydraulikflüssigkeit herangezogen wird.

4. Verfahren nach Anspruch 3, **dadurch gekennzeichnet, dass** aus einer Vielzahl von zur Ermittlung des Hydraulikdrucks (p_sys) und/oder zur Erfassung der Betriebstemperatur der Hydraulikflüssigkeit im Hydrauliksystem (22) verteilt angeordneten Sensoreinrichtungen (60, 62, 64, 66, 68) von der Kontrolleinrichtung (56) diejenigen ausgewählt bzw. herangezogen werden, die dem Hydrospeicher (14) bzw. dessen Flüssigkeitsraum (20) räumlich am nächsten ist.

5. Verfahren nach wenigstens einem der vorhergehenden Ansprüche, **dadurch gekennzeichnet, dass** von der Kontrolleinrichtung (56) durch Ansteuerung einer Bedienerschnittstelle (76) die Ausgabe einer auf eine Fehlfunktion des Hydrospeichers (14) hinweisenden Fahrerinformation und/oder die Erzeugung eines auf eine Fehlfunktion des Hydrospeichers (14) hinweisenden Eintrags in ein Diagnosesystem veranlasst wird.
